# EUROPEAN PATENT APPLICATION

(11) **EP 4 808 167 A1**
(43) Date of publication of application: **16.09.2026**
(21) Application number: 25194033.4
(22) Date of filing: 05.08.2025
(51) Int. Cl.: H04W 4/06, H04W 4/80, G06F 8/65, G06F 21/57, H04W 8/24, H04W 4/30, H04W 84/18

(54) **SYSTEM AND METHOD OF DEVICE DEPLOYMENT**

(30) Priority: 13.03.2025 CN 202510295125
(71) Applicant: Getac Technology Corporation, New Taipei City 221009 (TW)
(72) Inventor: LEE, Wang-Jiun, 11568 Taipei City (TW); TSAO, Hsuan-Wei, 11568 Taipei City (TW)
(74) Representative: Viering, Jentschura & Partner mbB Patent- und Rechtsanwälte

(57) **Abstract**

A method of device deployment includes steps as follows. A beacon signal with a switching mode message is repeatedly sent by a Bluetooth low energy (BLE) transmitter device, and the beacon signal with the switching mode message is used to trigger receiving devices to transmit data based on a generic attribute profile (GATT); after a receiving device of the receiving devices is triggered by the beacon signal with the switching mode message, the receiving device based on the GATT receives device deployment data from a GATT transmitter device specified by the beacon signal with the switching mode message, so that the receiving device can use the device deployment data to perform a subsequent deployment after the receiving device is booted initially.

## Description

### BACKGROUND

### Field of Invention

The present invention relates to systems and methods, and more particularly, to systems and methods of device deployment.

### Description of Related Art

In a wireless environment, if a large number of devices need to be unboxed, or many different settings of the devices need to be deployed, how to execute the first deployment step will typically become the key to whether the entire mechanism has practicality or not. Common methods include the following.

The first method is to manually set a Wi-Fi connection to a remote server. Although access points (APs) without authentication can simplify the connection process, there are security concerns. Setting up authenticated APs will increase the complexity of the connection setup steps.

The second method is to set up through an offline method, such as QR code or file transmission, etc., but manual operation one device at a time is inevitable in this method.

The third method uses Bluetooth low energy (BLE) to transmit device deployment data repeatedly. However, the amount of data that can be transmitted each time is very small, approximately less than or equal to about 31 bytes. When transmitting a large amount of data, there is a concern that the message transmission time may be too long. If the user needs to transmit a large amount of data to multiple devices in a short period of time, the BLE method is not suitable for a large number of devices to be deployed.

### SUMMARY

In one or more various aspects, the present disclosure is directed to systems and methods of device deployment to solve the problems of the prior art.

Some embodiments of the present disclosure are related to a method of device deployment. The method of device deployment includes steps of: using a Bluetooth low energy (BLE) transmitter device to repeatedly send a beacon signal with a switching mode message, where the beacon signal with the switching mode message is used to trigger a plurality of receiving devices to transmit data based on a generic attribute profile (GATT); and after a receiving device of the receiving devices is triggered by the beacon signal with the switching mode message, using the receiving device based on the GATT to receive device deployment data from a GATT transmitter device assigned by the beacon signal with the switching mode message, so that the receiving device uses the device deployment data to perform a subsequent deployment after the receiving device is booted initially.

In some embodiments of the present disclosure, the method of device deployment further includes: activating a built-in initial boot service through each of the receiving devices when being booted initially, so that the each of the receiving devices executes a BLE mode to continuously receive information.

In some embodiments of the present disclosure, the method of device deployment further includes: after the receiving device of the receiving devices receives the information, determining whether the information is the beacon signal with the switching mode message through the receiving device; and when the receiving device determines that the information is the beacon signal with the switching mode message, using the receiving device to switch the BLE mode to a connection mode to broadcast an existence of the receiving device.

In some embodiments of the present disclosure, the method of device deployment further includes: after the GATT transmitter device monitors the receiving device, using the GATT transmitter device to determine whether a service and a characteristic of the GATT transmitter device are equal to a service and a characteristic of the receiving device; and when the GATT transmitter device determines that the service and the characteristic of the GATT transmitter device are equal to the service and the characteristic of the receiving device, using the GATT transmitter device to transmit the device deployment data to the receiving device through a one-to-one connection.

In some embodiments of the present disclosure, the method of device deployment further includes: after the GATT transmitter device transmits the device deployment data to the receiving device, using the GATT transmitter device to request the receiving device to return a confirmation message, where the confirmation message is related to whether the receiving device has completely received the device deployment data.

In some embodiments of the present disclosure, the method of device deployment further includes: after the GATT transmitter device transmits the device deployment data to the receiving device, using the GATT transmitter device to transmit the device deployment data to another receiving device executing the connection mode of the receiving devices.

In some embodiments of the present disclosure, the method of device deployment further includes: after the receiving device monitors the GATT transmitter device, using the receiving device to determine whether a service and a characteristic of the GATT transmitter device are equal to a service and a characteristic of the receiving device; and when the receiving device determines that the service and the characteristic of the GATT transmitter device are equal to the service and the characteristic of the receiving device, using the receiving device to request the device deployment data from the GATT transmitter device.

In some embodiments of the present disclosure, the method of device deployment further includes: after the receiving device receives the device deployment data, using the receiving device to send a confirmation message to the GATT transmitter device, where the confirmation message is related to whether the receiving device has completely received the device deployment data.

In some embodiments of the present disclosure, the method of device deployment further includes: after the receiving device receives the device deployment data, using the receiving device to disconnect from the GATT transmitter device, so that another receiving device executing the connection mode of the receiving devices is connected to the GATT transmitter device.

Some embodiments of the present disclosure are related to a system of device deployment. The system of device deployment includes a generic attribute profile (GATT) transmitter device, a plurality of receiving devices and a Bluetooth low energy (BLE) transmitter device. The receiving devices are respectively disposed within a communication range of the GATT transmitter device. The BLE transmitter device is configured to repeatedly send a beacon signal with a switching mode message, where the beacon signal with the switching mode message is used to trigger the receiving devices to transmit data based on a GATT, after a receiving device of the receiving devices is triggered by the beacon signal with the switching mode message, the receiving device based on the GATT receives device deployment data from the GATT transmitter device assigned by the beacon signal with the switching mode message, so that the receiving device uses the device deployment data to perform a subsequent deployment after the receiving device is booted initially.

In some embodiments of the present disclosure, each of the receiving devices activates a built-in initial boot service when being booted initially, so that the each of the receiving devices executes a BLE mode to continuously receive information, after the receiving device of the receiving devices receives the information, the receiving device determines whether the information is the beacon signal with the switching mode message, when the receiving device determines that the information is the beacon signal with the switching mode message, the receiving device switches the BLE mode to a connection mode to broadcast an existence of the receiving device.

In some embodiments of the present disclosure, after the GATT transmitter device monitors the receiving device, the GATT transmitter device determines whether a service and a characteristic of the GATT transmitter device are equal to a service and a characteristic of the receiving device, when the GATT transmitter device determines that the service and the characteristic of the GATT transmitter device are equal to the service and the characteristic of the receiving device, the GATT transmitter device transmits the device deployment data to the receiving device through a one-to-one connection.

In some embodiments of the present disclosure, after the GATT transmitter device transmits the device deployment data to the receiving device, the GATT transmitter device transmits the device deployment data to another receiving device executing the connection mode of the receiving devices.

In some embodiments of the present disclosure, after the receiving device monitors the GATT transmitter device, the receiving device determines whether a service and a characteristic of the GATT transmitter device are equal to a service and a characteristic of the receiving device, when the receiving device determines that the service and the characteristic of the GATT transmitter device are equal to the service and the characteristic of the receiving device, the receiving device requests the device deployment data from the GATT transmitter device.

In some embodiments of the present disclosure, after the receiving device receives the device deployment data, the receiving device disconnects from the GATT transmitter device, so that another receiving device executing the connection mode of the receiving devices is connected to the GATT transmitter device.

Some embodiments of the present disclosure are related to a method of device deployment. The method of device deployment includes steps of: using a Bluetooth low energy (BLE) transmitter device to repeatedly send a beacon signal with a switching mode message, where the beacon signal with the switching mode message is used to trigger a plurality of receiving devices to transmit data based on a generic attribute profile (GATT), and the receiving devices are disposed within a communication range of a GATT transmitter device respectively; and after a receiving device of the receiving devices is triggered by the beacon signal with the switching mode message, using the receiving device based on the GATT to receive device deployment data from the GATT transmitter device assigned by the beacon signal with the switching mode message, so that the receiving device uses the device deployment data to perform a subsequent deployment after the receiving device is booted initially.

In some embodiments of the present disclosure, the method of device deployment further includes: activating a built-in initial boot service through each of the receiving devices when being booted initially, so that the each of the receiving devices executes a BLE mode to continuously receive information; and after the receiving device of the receiving devices receives the information, determining whether the information is the beacon signal with the switching mode message through the receiving device.

In some embodiments of the present disclosure, the method of device deployment further includes: when the receiving device determines that the information is the beacon signal with the switching mode message, using the receiving device to switch the BLE mode to a connection mode to broadcast an existence of the receiving device.

In some embodiments of the present disclosure, the method of device deployment further includes: after the GATT transmitter device monitors the receiving device, using the GATT transmitter device to determine whether a service and a characteristic of the GATT transmitter device are equal to a service and a characteristic of the receiving device; when the GATT transmitter device determines that the service and the characteristic of the GATT transmitter device are equal to the service and the characteristic of the receiving device, using the GATT transmitter device to transmit the device deployment data to the receiving device through a one-to-one connection; and after the GATT transmitter device transmits the device deployment data to the receiving device, using the GATT transmitter device to transmit the device deployment data to another receiving device executing the connection mode of the receiving devices.

In some embodiments of the present disclosure, the method of device deployment further includes: after the receiving device monitors the GATT transmitter device, using the receiving device to determine whether a service and a characteristic of the GATT transmitter device are equal to a service and a characteristic of the receiving device; when the receiving device determines that the service and the characteristic of the GATT transmitter device are equal to the service and the characteristic of the receiving device, using the receiving device to request the device deployment data from the GATT transmitter device; and after the receiving device receives the device deployment data, using the receiving device to disconnect from the GATT transmitter device, so that another receiving device executing the connection mode of the receiving devices is connected to the GATT transmitter device.

Technical advantages are generally achieved by embodiments of the present disclosure. The present disclosure provides systems and methods of device deployment, which combines a beacon signal based on the BLE mode with a connection mode based on the GATT (Generic Attribute Profile), so that the beacon signal is used as a trigger signal and the connection mode based on the GATT is used as a medium for transmitting data. This solves the problem of large amounts of data to be transmitted, eliminates the need to transmit deployment settings through a Wi-Fi access point, and eliminates tedious manual operations. When customers are in a hurry to deploy devices, the technology proposed in the present disclosure can be used to speed up the process of device deployment.

Many of the attendant features will be more readily appreciated, as the same becomes better understood by reference to the following detailed description considered in connection with the accompanying drawings.

### BRIEF DESCRIPTION OF THE DRAWINGS

The invention can be more fully understood by reading the following detailed description of the embodiment, with reference made to the accompanying drawings as follows:
Fig. 1 is a block diagram of a system of device deployment according to some embodiments of the present disclosure; and
Fig. 2 is a flow chart of a method of device deployment according to some embodiments of the present disclosure.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

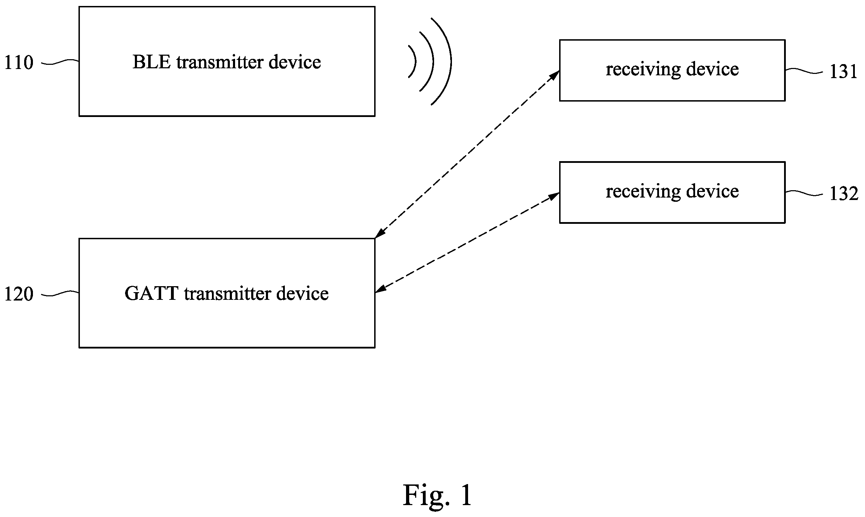

Referring to Fig. 1, in one aspect, the present disclosure is directed to a system of device deployment. The system of device deployment can be applied to various computers and may be applicable or readily adaptable to all technologies. Accordingly, the electronic devices have advantages. Herewith the electronic devices are described below with Fig. 1.

The subject disclosure provides the system of device deployment in accordance with the subject technology. Various aspects of the present technology are described with reference to Fig. 1. In the following description, for purposes of explanation, numerous specific details are set forth in order to provide a thorough understanding of one or more aspects. It can be evident, however, that the present technology can be practiced without these specific details. In other instances, well-known structures and devices are shown in block diagram form in order to facilitate describing these aspects. The word "exemplary" is used herein to mean "serving as an example, instance, or illustration." Any embodiment described herein as "exemplary" is not necessarily to be construed as preferred or advantageous over other embodiments.

Referring to Fig. 1, Fig. 1 is a block diagram of a system of device deployment according to some embodiments of the present disclosure. As shown in Fig. 1, the system of device deployment includes a GATT transmitter device 120, receiving devices 131 and 132, and a BLE transmitter device 110. For example, the GATT transmitter device 120, the receiving devices 131 and 132, and the BLE transmitter device 110 can be the same or similar devices, such as tablet computers, smart phones, laptop computers, etc.

In structure, the receiving devices 131 and 132 are respectively disposed within the communication range of the BLE mode of the BLE transmitter device 110. The receiving devices 131 and 132 are respectively disposed within a communication range of the GATT transmitter device 120 (e.g., a communication range of a connection mode based on GATT).

In use, the BLE transmitter device 110 repeatedly sends a beacon signal with a switching mode message, where the beacon signal with the switching mode message is used to trigger the receiving devices 131 and 132 to transmit data based on a generic attribute profile (GATT). After one (taking the receiving device 131 as an example) of the receiving devices 131 and 132 is triggered by the beacon signal with the switching mode message, the receiving device 131 based on the GATT receives device deployment data from the GATT transmitter device 120 assigned by the beacon signal with the switching mode message, so that the receiving device 131 uses the device deployment data to perform a subsequent deployment after the receiving device 131 is booted initially.

In some embodiments of the present disclosure, each of the receiving devices 131 and 132 activates a built-in initial boot service (e.g., a built-in boot program) when being booted initially, so that the each of the receiving devices 131 and 132 executes a BLE mode to continuously receive information. After the receiving device 131 of the receiving devices 131 and 132 receives the information, the receiving device 131 determines whether the information is the beacon signal with the switching mode message. When the receiving device 131 determines that the information is the beacon signal with the switching mode message, the receiving device 131 switches the BLE mode to a connection mode (e.g., a connection mode based on GATT) to broadcast an existence of the receiving device 131.

Next, in some embodiments of the present disclosure, after the GATT transmitter device 120 monitors the receiving device 131, the GATT transmitter device 120 determines whether a service (e.g., a service UUID) and a characteristic (e.g., a read characteristics UUID and a write characteristics UUID) of the GATT transmitter device 120 are equal to a service (e.g., a service UUID) and a characteristic (e.g., a read characteristics UUID and a write characteristics UUID) of the receiving device 131. When the GATT transmitter device 120 determines that the service and the characteristic of the GATT transmitter device 120 are equal to the service and the characteristic of the receiving device 131, the GATT transmitter device 120 transmits the device deployment data to the receiving device 131 through a one-to-one connection. Moreover, after the GATT transmitter device 120 transmits the device deployment data to the receiving device 131, the GATT transmitter device 120 transmits the device deployment data to another receiving device 132 executing the connection mode of the receiving devices 131 and 132.

Alternatively, in some embodiments of the present disclosure, after the receiving device 131 monitors the GATT transmitter device 120, the receiving device 131 determines whether a service (e.g., a service UUID) and a characteristic (e.g., a read characteristics UUID and a write characteristics UUID) of the GATT transmitter device 120 are equal to a service (e.g., a service UUID) and a characteristic (e.g., a read characteristics UUID and a write characteristics UUID) of the receiving device 131. When the receiving device 131 determines that the service and the characteristic of the GATT transmitter device 120 are equal to the service and the characteristic of the receiving device 131, the receiving device 131 requests the device deployment data from the GATT transmitter device 120. Moreover, after the receiving device 131 receives the device deployment data, the receiving device 131 disconnects from the GATT transmitter device 120, so that another receiving device 132 executing the connection mode of the receiving devices 131 and 132 is connected to the GATT transmitter device 120.

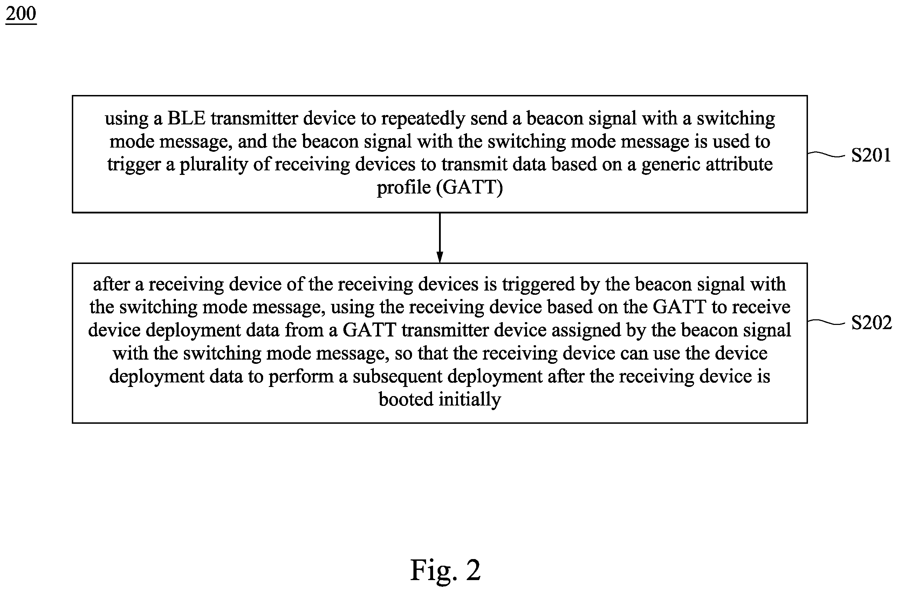

For a more complete understanding of operations performed by the system of device deployment, referring Fig. 1 and Fig. 2, Fig. 2 is a flow chart of the method 200 of device deployment according to an embodiment of the present disclosure. As shown in Fig. 2, the method 200 of device deployment includes steps S201 and S202. However, as could be appreciated by persons having ordinary skill in the art, for the steps described in the present embodiment, the sequence in which these steps is performed, unless explicitly stated otherwise, can be altered depending on actual needs; in certain cases, all or some of these steps can be performed concurrently.

In step S201, the BLE transmitter device 110 is used to repeatedly send a beacon signal with a switching mode message, where the beacon signal with the switching mode message is used to trigger a plurality of receiving devices to transmit data based on the GATT. In step S202, after a receiving device (taking the receiving device 131 as an example) of the receiving devices 131 and 132 is triggered by the beacon signal with the switching mode message, the receiving device 131 based on the GATT receives device deployment data from a GATT transmitter device assigned by the beacon signal with the switching mode message, so that the receiving device 131 uses the device deployment data to perform a subsequent deployment after the receiving device is booted initially.

Regarding the message composition of the beacon signal with the switching mode message of the BLE transmitter device 110, in some embodiments of the present disclosure, the BLE transmitter device 110 performs the encryption and segmentation process on the beacon signal with the switching mode message to obtain a plurality of sub-encrypted messages. For example, the encryption and segmentation process first uses the built-in key to encrypt the beacon signal with the switching mode message so as to obtain an encrypted message, and then segments the encrypted message into the plurality of sub-encrypted messages; alternatively, the encryption and segmentation process segments the beacon signal with the switching mode message into a plurality of sub-messages, and then uses the built-in key to encrypt the plurality of sub-messages so as to obtain the plurality of sub-encrypted messages. Alternatively or additionally, when the beacon signal with the switching mode message is very short, the segmentation may be omitted.

In some embodiments of the present disclosure, the method 200 of device deployment further includes: activating a built-in initial boot service through each of the receiving devices 131 and 132 when being booted initially, so that the each of the receiving devices 131 and 132 executes a BLE mode to continuously receive information. For example, the receiving device 131 continues to receive information so as to completely receive the plurality of sub-encrypted messages and decrypts them to restore the beacon signal with the switching mode message. The receiving device 131 determines that above received information is the beacon signal with the switching mode message.

Specifically, in some embodiments of the present disclosure, each of the sub-encrypted messages of the BLE transmitter device 110 includes a protocol identifier, a sender identifier of the BLE transmitter device 110, a message identifier of the switching mode message, the total number of the sub-encrypted messages, a sub-encrypted message number, and an encrypted message body. In addition, depending on practical situations, the fields of the sub-encrypted messages can be adjusted. For example, if each one in the plurality of sub-encrypted messages is independently encrypted, then the total number of the plurality of sub-encrypted messages and the sub-encrypted message numbers can be placed in the encrypted message bodies. If the message is encrypted and then segmented into the plurality of sub-encrypted messages, the total number of the plurality of sub-encrypted messages and the sub-encrypted message numbers can be moved to outsides of the encrypted message bodies. **In** addition, a data compression technology can be used to reduce message lengths, and timestamp(s) and/or additional hash(es)/error-correcting code(s) can be used to ensure message integrity.

Continuing from the above, in some embodiments of the present disclosure, the process of the receiving device 131 determining whether the continuously received information is the beacon signal with the switching mode message includes: each time when the receiving device 131 receives a sub-encrypted message in the plurality of sub-encrypted messages, determining whether a format of the sub-encrypted message conforms to a preset legal format or not; determining whether the protocol identifier matches a preset protocol identifier or not when the format of the sub-encrypted message conforms to the preset legal format; recording the sender identifier, the message identifier, and the total number of messages when the protocol identifier matches the preset protocol identifier; establishing a message list, and adding the sub-encrypted message number and the encrypted message body of the sub-encrypted message into the message list; continuing to receive other sub-encrypted messages with other sub-encrypted message numbers that match the message identifier in the **BLE** mode until a number of the received plurality of sub-encrypted messages reaches the total number of messages; combining the plurality of encrypted message bodies correspondingly in the plurality of sub-encrypted messages in sequence according to the sub-encrypted message number of each of the plurality of sub-encrypted messages and decrypting it into the beacon signal with the switching mode message; and determining that the received information is the beacon signal with the switching mode message when confirming that a format of the beacon signal with the switching mode message conforms to a preset correct format.

In some embodiments of the present disclosure, the method 200 of device deployment further includes: after the receiving device 131 of the receiving devices 131 and 132 receives the information, determining whether the information is the beacon signal with the switching mode message through the receiving device 131; and when the receiving device 131 determines that the information is the beacon signal with the switching mode message, using the receiving device 131 to switch the BLE mode to a connection mode to broadcast an existence of the receiving device 131.

Regarding the GATT transmitter device 120 being the party that actively initiates the connection, in some embodiments of the present disclosure, the method 200 of device deployment further includes: after the GATT transmitter device 120 monitors the receiving device 131, using the GATT transmitter device 120 to determine whether a service and a characteristic of the GATT transmitter device 120 are equal to a service and a characteristic of the receiving device 131; and when the GATT transmitter device 120 determines that the service and the characteristic of the GATT transmitter device 120 are equal to the service and the characteristic of the receiving device 131, using the GATT transmitter device 120 to transmit the device deployment data to the receiving device 131 through the one-to-one connection.

Optionally, in some embodiments of the present disclosure, the method 200 of device deployment further includes: after the GATT transmitter device 120 transmits the device deployment data to the receiving device 131, using the GATT transmitter device 120 to request the receiving device 131 to return a confirmation message, where the confirmation message is related to whether the receiving device 131 has completely received the device deployment data.

Then, in some embodiments of the present disclosure, the method 200 of device deployment further includes: after the GATT transmitter device 120 transmits the device deployment data to the receiving device 131, using the GATT transmitter device 120 to transmit the device deployment data to another receiving device 132 executing the connection mode of the receiving devices 131 and 132.

On the other hand, regarding the receiving device 131 being the party that actively initiates the connection, in some embodiments of the present disclosure, the method 200 of device deployment further includes: after the receiving device 131 monitors the GATT transmitter device 120, using the receiving device 131 to determine whether a service and a characteristic of the GATT transmitter device 120 are equal to a service and a characteristic of the receiving device 131; and when the receiving device 131 determines that the service and the characteristic of the GATT transmitter device 120 are equal to the service and the characteristic of the receiving device 131, using the receiving device 131 to request the device deployment data from the GATT transmitter device 120.

Optionally, in some embodiments of the present disclosure, the method 200 of device deployment further includes: after the receiving device 131 receives the device deployment data, using the receiving device 131 to send a confirmation message to the GATT transmitter device 120, where the confirmation message is related to whether the receiving device 131 has completely received the device deployment data.

Then, in some embodiments of the present disclosure, the method 200 of device deployment further includes: after the receiving device 131 receives the device deployment data, using the receiving device 131 to disconnect from the GATT transmitter device 120, so that another receiving device 132 executing the connection mode of the receiving devices 131 and 132 is connected to the GATT transmitter device 120.

Regarding the message composition of the device deployment data of the GATT transmitter device 120, in some embodiments of the present disclosure, the GATT transmitter device 120 performs the encryption and segmentation process on the device deployment data to obtain a plurality of sub-encrypted messages. For example, the encryption and segmentation process first uses the built-in key to encrypt the device deployment data so as to obtain an encrypted message, and then segments the encrypted message into the plurality of sub-encrypted messages; alternatively, the encryption and segmentation process segments the device deployment data into a plurality of sub-messages, and then uses the built-in key to encrypt the plurality of sub-messages so as to obtain the plurality of sub-encrypted messages. Regarding the aforementioned segmentation process, for example, the segmentation may be performed in a size of approximately 517 bytes.

Continuing from the above, for example, the receiving device 131 continuously receives information so as to receive the plurality of sub-encrypted messages and decrypts them to restore the device deployment data. The receiving device 131 uses the device deployment data to perform the subsequent deployment after the receiving device 131 is booted initially.

Specifically, in some embodiments of the present disclosure, each of the multiple sub-encrypted messages of the GATT transmitter device 120 includes a protocol identifier, a sender identifier of the GATT transmitter device 120, a message identifier of the device deployment data, the total number of the sub-encrypted messages, a sub-encrypted message number, and an encrypted message body. In addition, depending on practical situations, the fields of the sub-encrypted messages can be adjusted. For example, if each one in the plurality of sub-encrypted messages is independently encrypted, then the total number of the plurality of sub-encrypted messages and the sub-encrypted message numbers can be placed in the encrypted message bodies. If the message is encrypted and then segmented into the plurality of sub-encrypted messages, the total number of the plurality of sub-encrypted messages and the sub-encrypted message numbers can be moved to outsides of the encrypted message bodies. In addition, a data compression technology can be used to reduce message lengths, and timestamp(s) and/or additional hash(es)/error-correcting code(s) can be used to ensure message integrity.

Continuing from the above, in some embodiments of the present disclosure, the process of the receiving device 131 using the device deployment data to perform the subsequent deployment after the receiving device 131 is booted initially includes: each time when the receiving device 131 receives a sub-encrypted message in the plurality of sub-encrypted messages, determining whether a format of the sub-encrypted message conforms to a preset legal format or not; determining whether the protocol identifier matches a preset protocol identifier or not when the format of the sub-encrypted message conforms to the preset legal format; recording the sender identifier, the message identifier, and the total number of messages when the protocol identifier matches the preset protocol identifier; establishing a message list, and adding the sub-encrypted message number and the encrypted message body of the sub-encrypted message into the message list; continuing to receive other sub-encrypted messages with other sub-encrypted message numbers that match the message identifier in the connection mode until a number of the received plurality of sub-encrypted messages reaches the total number of messages; combining the plurality of encrypted message bodies correspondingly in the plurality of sub-encrypted messages in sequence according to the sub-encrypted message number of each of the plurality of sub-encrypted messages and decrypting it into the device deployment data; and after confirming that a format of the device deployment data conforms to a preset correct format, determining that the receiving device 131 decrypts successfully and confirms that the message format is correct, and then using the device deployment data to perform subsequent deployment through the receiving device 131 after the receiving device 131 is booted initially.

In an application example, in an environment without Wi-Fi, the transmitter needs to transmit a large amount of data to the receiving devices 131 and 132 in a short time. The transmitter uses the carousel of the BLE transmitter device 110 and the connection mode of the GATT transmitter device 120 to transmit data more quickly.

For example, the BLE transmitter device 110 and the GATT transmitter device 120 may be different transmitting devices.

For example, the BLE transmitter device 110 and the GATT transmitter device 120 can be integrated into an integrated transmitter device. If the hardware of the integrated transmitter device supports enabling both the BLE mode-based beacon signal and the GATT-based connection mode at the same time, and the user wishes to allow the integrated transmitter device to operate in both modes at the same time, the integrated transmitter device can enable both the BLE mode-based beacon signal and the GATT-based connection mode at the same time. When the integrated transmitter device monitors the receiving device 131, the data is transmitted using the connection mode based on GATT (e.g., when the receiving device 131 monitors and wirelessly connects with the integrated transmitter device, the data is transmitted by using the connection mode based on GATT).

For example, the BLE transmitter device 110 and the GATT transmitter device 120 can be integrated into an integrated transmitter device. If the hardware of the integrated transmitter device does not support simultaneous operation of the two modes, then when the beacon signal mode based on the BLE mode is turned on, the receiving devices 131 and 132 in the environment are monitored simultaneously. When the number of receiving devices 131 and 132 reaches a certain number (e.g., the upper limit of the hardware of the integrated transmitter device that can be connected), the integrated transmitter device switches to the connection mode based on GATT for data transmission (for example: when the receiving device 131 monitors and wirelessly connects with the integrated transmitter device, the integrated transmitter device stops repeatedly sending the beacon signal based on the BLE mode and connects with the receiving device 131. After the device deployment data is transmitted completely, the integrated transmitter device repeatedly sends the beacon signal based on the BLE mode again).

Optionally, for example, the data sent by the BLE transmitter device 110 can include encrypted service UUID and characteristics UUID(s). The receiving device 131 decrypts the data and replaces its own UUID with the received UUID(s). A reason for using this method to set the UUID of the receiving device 131 is to prevent the fixed UUID from being deciphered and from allowing others to obtain the message to be transmitted.

For example, the receiving devices 131 and 132 do not need to enter the same place at a specific time, but only need to be able to decrypt the messages based on the BLE mode (e.g., the sub-encrypted messages), the switching mode, connection, and the messages transmitted through the connection.

In practice, for example, the beacon signal sent by the BLE transmitter device 110 based on the BLE mode and the connection mode of the GATT transmitter device 120 based on the GATT mode can solve the problem of large amount of data transmission. All of the receiving devices 131, 132 within the carousel range do not need to receive messages (e.g., the sub-encrypted messages) in sequence, but only need to be able to assemble the complete message, to interpret it, and to switch to the connection mode based on GATT.

It should be noted that the connection mode based on GATT cannot be sent to the receiving devices 131 and 132 at the same time as the BLE mode-based carousel manner. Instead, each receiving device needs to receive the device deployment data transmitted by the GATT transmitter device 120 in sequence after the previous receiving device is disconnected from the GATT transmitter device 120.

Since the connection mode based on GATT allows two-way communication, after the GATT transmitter device 120 sends the complete device deployment data, it can request the receiving device 131 to send back a message about "whether the data has been completely received" as a confirmation record of the GATT transmitter device 120.

Technical advantages are generally achieved by embodiments of the present disclosure. The present disclosure provides systems and methods of device deployment, which combines a beacon signal based on the BLE mode with a connection mode based on the GATT (Generic Attribute Profile), so that the beacon signal is used as a trigger signal and the connection mode based on the GATT is used as a medium for transmitting data. This solves the problem of large amounts of data to be transmitted, eliminates the need to transmit deployment settings through a Wi-Fi access point, and eliminates tedious manual operations. When customers are in a hurry to deploy devices, the technology proposed in the present disclosure can be used to speed up the process of the device deployment.

## Claims

1. A method (200) of device deployment, **characterized by** comprising:
using a Bluetooth low energy (BLE) transmitter device (110) to repeatedly send a beacon signal with a switching mode message, wherein the beacon signal with the switching mode message is used to trigger a plurality of receiving devices (131, 132) to transmit data based on a generic attribute profile (GATT); and
after a receiving device (131) of the receiving devices (131, 132) is triggered by the beacon signal with the switching mode message, using the receiving device (131) based on the GATT to receive device deployment data from a GATT transmitter device (120) assigned by the beacon signal with the switching mode message, so that the receiving device (131) uses the device deployment data to perform a subsequent deployment after the receiving device (131) is booted initially.

2. The method (200) of device deployment of claim 1, **characterized by** further comprising:
activating a built-in initial boot service through each of the receiving devices (131, 132) when being booted initially, so that the each of the receiving devices (131, 132) executes a BLE mode to continuously receive information.

3. The method (200) of device deployment of claim 2, **characterized by** further comprising:
after the receiving device (131) of the receiving devices (131, 132) receives the information, determining whether the information is the beacon signal with the switching mode message through the receiving device (131); and
when the receiving device (131) determines that the information is the beacon signal with the switching mode message, using the receiving device (131) to switch the BLE mode to a connection mode to broadcast an existence of the receiving device (131).

4. The method (200) of device deployment of claim 3, **characterized by** further comprising:
after the GATT transmitter device (120) monitors the receiving device (131), using the GATT transmitter device (120) to determine whether a service and a characteristic of the GATT transmitter device (120) are equal to a service and a characteristic of the receiving device (131); and
when the GATT transmitter device (120) determines that the service and the characteristic of the GATT transmitter device (120) are equal to the service and the characteristic of the receiving device (131), using the GATT transmitter device (120) to transmit the device deployment data to the receiving device (131) through a one-to-one connection.

5. The method (200) of device deployment of claim 4, **characterized by** further comprising:
after the GATT transmitter device (120) transmits the device deployment data to the receiving device (131), using the GATT transmitter device (120) to request the receiving device (131) to return a confirmation message, wherein the confirmation message is related to whether the receiving device (131) has completely received the device deployment data.

6. The method (200) of device deployment of claim 4 or claim 5, **characterized by** further comprising:
after the GATT transmitter device (120) transmits the device deployment data to the receiving device (131), using the GATT transmitter device (120) to transmit the device deployment data to another receiving device (132) executing the connection mode of the receiving devices (131, 132).

7. The method (200) of device deployment of claim 3, **characterized by** further comprising:
after the receiving device (131) monitors the GATT transmitter device (120), using the receiving device (131) to determine whether a service and a characteristic of the GATT transmitter device (120) are equal to a service and a characteristic of the receiving device (131); and
when the receiving device (131) determines that the service and the characteristic of the GATT transmitter device (120) are equal to the service and the characteristic of the receiving device (131), using the receiving device (131) to request the device deployment data from the GATT transmitter device (120).

8. The method (200) of device deployment of claim 7, **characterized by** further comprising:
after the receiving device (131) receives the device deployment data, using the receiving device (131) to send a confirmation message to the GATT transmitter device (120), wherein the confirmation message is related to whether the receiving device (131) has completely received the device deployment data.

9. The method (200) of device deployment of claim 7 or claim 8, **characterized by** further comprising:
after the receiving device (131) receives the device deployment data, using the receiving device (131) to disconnect from the GATT transmitter device (120), so that another receiving device (132) executing the connection mode of the receiving devices (131, 132) is connected to the GATT transmitter device (120).

10. A system of device deployment, **characterized by** comprising:
a generic attribute profile (GATT) transmitter device (120);
a plurality of receiving devices (131, 132) respectively disposed within a communication range of the GATT transmitter device (120); and
a Bluetooth low energy (BLE) transmitter device (110) configured to repeatedly send a beacon signal with a switching mode message, wherein the beacon signal with the switching mode message is used to trigger the receiving devices (131, 132) to transmit data based on a GATT, after a receiving device (131) of the receiving devices (131, 132) is triggered by the beacon signal with the switching mode message, the receiving device (131) based on the GATT receives device deployment data from the GATT transmitter device (120) assigned by the beacon signal with the switching mode message, so that the receiving device (131) uses the device deployment data to perform a subsequent deployment after the receiving device (131) is booted initially.

11. The system of device deployment of claim 10, **characterized in that** each of the receiving devices (131, 132) activates a built-in initial boot service when being booted initially, so that the each of the receiving devices (131, 132) executes a BLE mode to continuously receive information, after the receiving device (131) of the receiving devices (131, 132) receives the information, the receiving device (131) determines whether the information is the beacon signal with the switching mode message, when the receiving device (131) determines that the information is the beacon signal with the switching mode message, the receiving device (131) switches the BLE mode to a connection mode to broadcast an existence of the receiving device (131).

12. The system of device deployment of claim 11, **characterized in that** after the GATT transmitter device (120) monitors the receiving device (131), the GATT transmitter device (120) determines whether a service and a characteristic of the GATT transmitter device (120) are equal to a service and a characteristic of the receiving device (131), when the GATT transmitter device (120) determines that the service and the characteristic of the GATT transmitter device (120) are equal to the service and the characteristic of the receiving device (131), the GATT transmitter device (120) transmits the device deployment data to the receiving device (131) through a one-to-one connection.

13. The system of device deployment of claim 12, **characterized in that** after the GATT transmitter device (120) transmits the device deployment data to the receiving device (131), the GATT transmitter device (120) transmits the device deployment data to another receiving device (132) executing the connection mode of the receiving devices (131, 132).

14. The system of device deployment of claim 11, **characterized in that** after the receiving device (131) monitors the GATT transmitter device (120), the receiving device (131) determines whether a service and a characteristic of the GATT transmitter device (120) are equal to a service and a characteristic of the receiving device (131), when the receiving device (131) determines that the service and the characteristic of the GATT transmitter device (120) are equal to the service and the characteristic of the receiving device (131), the receiving device (131) requests the device deployment data from the GATT transmitter device (120).

15. The system of device deployment of claim 14, **characterized in that** after the receiving device (131) receives the device deployment data, the receiving device (131) disconnects from the GATT transmitter device (120), so that another receiving device (132) executing the connection mode of the receiving devices (131, 132) is connected to the GATT transmitter device (120).
